Europäisches Patentamt

European Patent Office

Office européen des brevets

(19)

(11) Publication number: **0 506 627 A1**

## (12) EUROPEAN PATENT APPLICATION

(21) Application number : **92830131.6**

(22) Date of filing : **19.03.92**

(51) Int. Cl.⁵ : **H02G 3/08, H02G 15/013**

(30) Priority : **25.03.91 IT MI910793**

(43) Date of publication of application :
**30.09.92 Bulletin 92/40**

(84) Designated Contracting States :
**DE ES FR GB PT**

(71) Applicant : **Codrino, Giuseppe**
**Via Stazione, 2**
**I-15028 Quattordio (Alessandria) (IT)**

(72) Inventor : **Codrino, Giuseppe**
**Via Stazione, 2**
**I-15028 Quattordio (Alessandria) (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

(54) **Method for making sealed connections of cable sheaths through walls and the like.**

(57)    A method for making sealed connections of cable sheaths through a wall comprises the step of providing preset regions of a continuous protective electrical cable sheath with a foamed plastic material layer and the step of co-molding on this layer a coupling element adapted to be tightly engaged in a hole provided through a wall or the like.

FIG. 1

EP 0 506 627 A1

## BACKGROUND OF THE INVENTION

The present invention relates to a method for making sealed connections of cable sheaths through walls and the like.

As is known, conventional electrical systems of motor vehicles usually comprise a plurality of electric and electronic components, either of the active or of the passive type, which are power supplied by insulated electrical cable bundles.

The electric and electronic component connections of such a system and a power supply unit are made by small electric cable bundles from preset regions of which there are extended the necessary electrical branchings.

These cable bundles are usually preliminarily arranged on assembling bases or tables and are advantageously provided with different color coatings or sheaths in order to allow an operator to easily make the electrical connections without errors.

After having carried out this starting assembling, the electrical cables are then introduced into a protective outer sheath so as to provide a single assembly which can be perfectly fitted to the several electrical and electronic components of the systems to which the cable terminal portions must be electrically connected or welded.

The mentioned outer protective sheath or tubular element including the electrical cables therein must frequently pass through holes formed through sheet metal walls separating different compartments of the motor vehicle.

At present, in order to properly seal the protective sheath of the electrical cables passing through said wall, there are used sealing-restraining elements.

Prior sealing elements intented for the above mentioned application, however, have not been found satisfactory, mainly because these elements do not provide a perfect tightness of the outer protective sheath or tubular element in the wall, moreover, these prior sealing elements are susceptible to easily disengage from the wall under the impacts occurring as the motor-vehicle is driven on uneven surface roads.

The disengagement of a wall sealing element is very deleterious since a not perfect seal would allow water to enter electrical apparatus of the motor vehicle electrical system with consequent deleterious malfunctions thereof.

## SUMMARY OF THE INVENTION

Accordingly, the aim of the present invention is to overcome the above mentioned drawbacks by providing a method for making sealed connections of cable sheaths through walls and the like, which method allows a protective outer sheath or tubular element to be made which is directly provided with integral outer sheath restraining elements specifically designed for restraining with a perfect tightness the outer sheath to a wall or the like.

Within the scope of the above mentioned aim, a main object of the present invention is to provide a method for making a continuous protective outer sheath or tubular element, for motor vehicle electrical system cables which is very reliable in operation and very competitive from a mere economic standpoint.

According to one aspect of the present invention, the above mentioned aim and objects, as well as yet other objects, which will become more apparent hereinafter, are achieved by a method for making a protective outer sheath for electrical cables to be tightly engaged in a hole of a wall or the like, characterized in that said method comprises the step of providing preset regions of said protective sheath with a foamed plastic material layer and co-molding on said foamed plastic material layer a sealing-restraining element for tightly fitting said sheath in said hole of said wall.

## BRIEF DESCRIPTION OF THE DRAWINGS

Further characteristics and advantages of the method according to the present invention will become more apparent hereinafter from the following detailed disclosure of a preferred, though not exclusive, embodiment thereof, which is illustrated, by way of an indicative, but not limitative, example, in the figures of the accompanying drawing, where:

Figure 1 is a schematic view illustrating a protective outer sheath or tubular element provided with a sealing element made by the method according to the present invention, and

Figure 2 is a longitudinal cross-sectional view of the sealing element as formed on a loose electrical cable bundle.

## DESCRIPTION OF THE PREFERRED EMBODIMENT

With reference to the figures of the accompanying drawings, the method according to the present invention comprises the step of forming, at preset regions of a continuous protective outer sheath or tubular element 1, an encompassing layer 2 of any suitable foamed plastic materials.

More specifically, this foamed plastic material layer can be applied both on the above mentioned protective outer sheath and directly on the cable bundle 3 at an interrupted portion of the outer sheath.

This foamed layer will adhere perfectly to the protective outer sheath or, alternatively, it will tightly embed the electrical cable bundle so as to provide a single block therewith.

In a second step of the method, a wall sealing element 4 is co-molded on the foamed layer, said sealing element having any suitable shape provided for fitting to the shape and size of the hole formed through the wall in which the outer sheath must be restrained.

As it should be apparent, the sealing element will provide a perfect tightness so as to prevent any water infiltration from occurring.

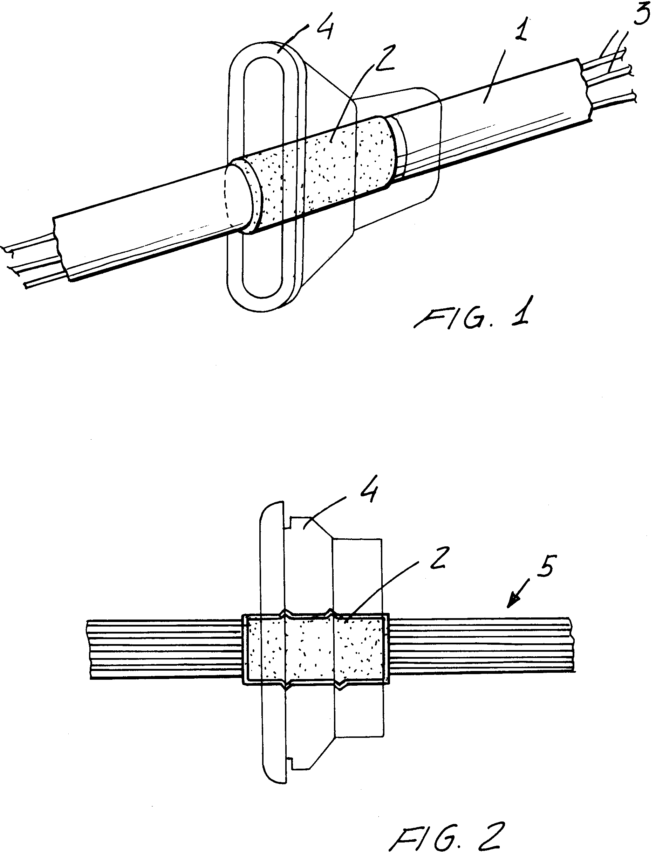

As shown in figure 2, the foamed region 2 with its related co-molded sealing element 4 can be directly formed on a loose electrical cable bundle 5.

From the above disclosure and the figures of the accompanying drawings it should be apparent that the invention fully achieves the intended aim and objects.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A method for making a protective outer sheath for electrical cables to be tightly engaged in a hole of a wall or the like, characterized in that said method comprises the step of providing preset regions of said protective sheath with a foamed plastic material layer and co-molding on said foamed plastic material layer a sealing-restraining element for tightly fitting said sheath in said hole of said wall.

2. A method, according to Claim 1, wherein said foamed plastic material layer is directly applied on said electrical cables through an interrupted portion of said sheath.

3. A method, according to Claim 1, wherein said foamed layer and said co-molded sealing element are directly formed on a loose electrical cable bundle.

FIG. 1

FIG. 2

EP 0 506 627 A1

**European Patent Office**

## EUROPEAN SEARCH REPORT

Application Number

EP 92 83 0131

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 594 269 (SOCIETE INDUSTRIELLE DE LIAISON ELECTRIQUE) | 1,3 | H02G3/08 H02G15/013 |
| A | * page 4, line 22 - page 7, line 25; claims 1-3,10,13,14; figures 1-5 * | 2 | |
| A | US-A-4 797 513 (ONO ET AL) * column 1, line 18 - line 60; figures 1A,1B * | 1 | |
| A | US-A-4 216 351 (BRANDEAU) * column 3, line 39 - line 68 * * column 4, line 49 - column 5, line 61; claims 1,7; figures 3-7 * | 1-3 | |
| | | | TECHNICAL FIELDS SEARCHED (Int. Cl.5) |
| | | | H02G |

The present search report has been drawn up for all claims

| Place of search | Date of completion of the search | Examiner |
|---|---|---|
| THE HAGUE | 15 JULY 1992 | RIEUTORT A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

5